# EUROPÄISCHE PATENTANMELDUNG

(11) **EP 2 436 815 A1**
(43) Veröffentlichungstag der Anmeldung: **04.04.2012**
(21) Anmeldenummer: 10011600.3
(22) Anmeldetag: 29.09.2010
(51) Int. Cl.: D04H 13/00, B32B 5/04, B32B 5/26

(54) **Material für medizinische Anwendungen und Verfahren zur Herstellung eines solchen**

(71) Anmelder: Carl Freudenberg KG, 69469 Weinheim (DE)
(72) Erfinder: Schlesselmann, Bernd, 69469 Weinheim (DE); Pehr, Marc, 64646 Heppenheim (DE)

(57) **Zusammenfassung**

Ein Material, umfassend einen Verbund aus einer ersten Lage (7) und einer zweiten Lage (6), wobei die erste Lage (7) als Stapelfaservliesstoff bestehend aus Stapelfasern ausgestaltet ist und wobei die zweite Lage (6) aus elastomeren Feinfasem gefertigt ist, ist im Hinblick auf die Aufgabe, ein Material anzugeben, welches günstig herstellbar ist, hohe Festigkeiten zeigt, eine reversible Verformbarkeit quer zur Maschinenrichtung zeigt, einen textilen Griff aufweist und eine zumindest einseitig hohe Abriebbeständigkeit aufweist, dadurch gekennzeichnet, dass die Feinfasem derart auf die zweite Lage (6) aufgesponnen sind, dass ein adhäsiver Kontakt zwischen beiden Lagen (6, 7) entsteht, wobei der adhäsive Kontakt an Berührungspunkten der Feinfasem und Stapelfasern entsteht und wobei diese Berührungspunkte sich über die aneinander liegenden Grenzflächen der Lagen (6, 7) erstrecken.

## Beschreibung

### Technisches Gebiet

Die Erfindung betrifft ein Material gemäß dem Oberbegriff des Patentanspruchs 1.

### Stand der Technik

Seit vielen Jahren sind wasserstrahlverfestigte Polyestervliesstoffe mit einem Flächengewicht von 40 bis 45 g/m² als Materialien für medizinische Anwendungen, insbesondere als Trägermaterialien für Wundverbände bzw. Pflaster im Einsatz.

Diese Materialien zeigen gute Festigkeiten, eine textile Haptik und Optik. Quer zur Maschinenrichtung entfalten sie eine gute mechanische Anpassungsfähigkeit an Rundungen von Körperoberflächen. Dies hängt mit niedrigen Moduln zusammen, die quer zur Maschinenrichtung wirken.

Diese Materialien sind außerdem kostengünstig herstellbar, Nachteilig ist, dass sie ein hohes Pilling, nämlich einen hohen Faserabrieb, zeigen. Des Weiteren ist nachteilig, dass Verformungen der bekannten Materialien nicht reversibel sind. Diese Irreversibilität der Verformung beeinträchtigt den Tragekomfort besonders dann, wenn Verbände an Gelenkstellen eines menschlichen oder tierischen Körpers fixiert werden.

Neben den zuvor beschriebenen Materialien finden für gleiche Anwendungen auch Meltblownvliesstoffe aus thermoplastischen Elastomeren, insbesondere aus thermoplastischem Polyurethan, mit Flächengewichten von 50 bis 75 g/m² Verwendung.

Diese Materialien weisen eine sehr gleichmässige und dichte Struktur auf. Des Weiteren sind sie elastisch in Maschinenrichtung und quer zu dieser. Sie passen sich Verformungen reversibel an.

Nachteilig an diesen Materialien sind deren geringe Festigkeiten, insbesondere deren geringe Weiterreißfestigkeiten. Nachteilig ist auch deren gummiartige Haptik bzw. deren Griff, deren hohes Gewicht, deren Herstellungskosten und deren vergleichsweise hohen Moduln,

Die Elastizität dieser Materialien in Maschinenrichtung ist problematisch bei der Verarbeitung auf vielen Standard-Konfektioniermaschinen, da es zu Verzügen und unerwünschten Dehnungen kommen kann.

### Darstellung der Erfindung

Der Erfindung liegt daher die Aufgabe zugrunde, ein Material zu entwickeln, welches die Vorteile der beiden vorgenannten Materialien weitgehend in sich vereinigt, möglichst ohne deren Nachteile zu übemehmen, nämlich ein Material anzugeben, welches günstig herstellbar ist, hohe Festigkeiten zeigt, eine reversible Verformbarkeit quer zur Maschinenrichtung zeigt, einen textilen Griff aufweist und eine zumindest einseitig hohe Abriebbeständigkeit aufweist.

Die vorliegende Erfindung löst die zuvor genannte Aufgabe durch die Merkmale des Patentanspruchs 1.

Erfindungsgemäß wird ein Verbund aus einer ersten Lage, die als Stapelfaservliesstoff ausgestaltet ist, und einer zweiten Lage realisiert, die als Faserschicht aus elastomeren Feinfasem ausgestaltet ist. Hierzu wird die zweite Lage erfindungsgemäß derart auf die erste Lage aufgesponnen, dass ein adhäsiver Kontakt zwischen beiden Lagen entsteht.

Konkret ist erkannt worden, dass der adhäsive Kontakt an Berührungspunkten der Feinfasem und Stapelfasern entsteht, wobei diese Berührungspunkte sich über nahezu die kompletten aneinander liegenden Grenzflächen der Lagen erstrecken. Die Stapelfasern des Stapelfaservliesstoffes können dabei zu einem Teil ihres Umfangs von den elastomeren Feinfasem umschlossen sein.

Der erfindungsgemäße Verbund ist weich im Griff und quer zur Maschinenrichtung mit niedrigen Kräften verformbar, Er weist in dieser Richtung eine hohe Verformbarkeit unter Entfaltung einer elastischen Rückstellung auf. Die zweite Lage aus Feinfasem weist eine gute Abriebbeständigkeit auf. Vom Fachmann unerwartet und überraschend ist insbesondere, dass der Verbund weitgehend ungestört die elastischen Eigenschaften der zweiten Lage übemimmt.

Insoweit ist überraschend ein Material, insbesondere für medizinische Verwendungen, angegeben, welches günstig herstellbar ist, hohe Festigkeiten zeigt, eine reversible Verformbarkeit quer zur Maschinenrichtung zeigt, einen textilen Griff aufweist und eine zumindest einseitig hohe Abriebbeständigkeit aufweist.

Folglich ist die eingangs genannte Aufgabe gelöst.

Der Stapetfaservtiesstoff könnte durch Wasserstrahlen verfestigt sein und die Feinfasem könnten ein Meltblownvlies oder einen Meltblownvliesstoff ausbilden. Das hier beschriebene Meltblownvlies oder ein Meltblownvliesstoff aus thermoplastischem Polyurethan kann vollflächig mit dem Stapelfaservlies oder dem Stapelfaservliesstoff verklebt werden und nicht nur an einzelnen Stellen. Vorteilhaft könnte der Stapelfaservliesstoff durch Wasserstrahlen verfestigt sein. Hierdurch werden die Stapelfasern besonders fest und zugleich schonend miteinander verschlungen.

Die zweite Lage könnte ein Flächengewicht von höchstens 10 g/m² aufweisen. Überraschend wird bereits mit einer derart geringen Auflage an elastomeren Feinfasem ein Verbund erhalten, der die an ihn gerichteten, in der Aufgabe formulierten, Anforderungen gut erfüllt. Der Fachmann hätte erwartet, dass er ein weit höheres Auflagegewicht an Feinfasem aufbringen müsste, um den genannten Anforderungen gerecht zu werden. Das niedrige Auflagegewicht an elastischen bzw. elastomeren Feinfasem führt zu geringen Kosten bei der Fertigung des Verbunds.

Vorteilhaft könnte der Stapelfaservliesstoff als mit Wasserstrahlen verfestigter bzw. vemadelter Potyestervliesstoff mit einem Flächengewicht im Bereich 20 bis 50 g/m² ausgestaltet sein. Dieser Stapelfaservilesstoff zeigt vorteilhat hydrophobe Oberflächeneigenschaften. Er ist überdies mit allen gängigen Sterilisierungsverfahren, einschließlich Gamma- oder Elektronenstrahlung, sterilisierbar und mit geringen Kosten herstellbar.

Besonders bevorzugt könnte der Stapelfaservliesstoff ein Flächengewicht im Bereich von 30 bis 40 g/m² aufweisen, wobei er eine Bruchdehnung quer zur Maschinenrichtung von mehr als 120%, bevorzugt von mehr als 150% aufweist. Er könnte niedrige Moduln in Querrichtung zeigen. Diese hohe Bruchdehnung stellt überraschend sicher, dass eine elastische Verformung des Verbunds nicht durch den Bruch des Stapelfaservliesstoffs bei niedrigen Dehnungswerten begrenzt wird.

Die Fasertiter der Stapelfasern könnten im Bereich 0,5 bis 4,4 dtex liegen. Besonders bevorzugt könnten die Fasertiter im Bereich 1,5 bis 2,5 dtex liegen.

Der Stapelfaservliesstoff könnte aus allen bekannten synthetischen Stapelfasern gefertigt sein. Dabei ist denkbar, dass die Stapelfasern aus Polypropylen, Polyester, Polyamid, Polyethylen, Viskose oder Copolymeren gefertigt sind. Denkbar ist auch, Bi- und Multikomponentenfasern einzusetzen, die aus zwei oder mehreren unterschiedlichen Polymeren aufgebaut sind.

Die elastomeren Feinfasem der zweiten Lage könnten aus thermoplastischen Elastomeren aufgebaut sein. Diese verleihen dem Verbund die gewünschte Elastizität bei problemloser Herstellbarkeit. Dabei ist denkbar, alle Polymere zu wählen, die in einem Spinnprozess verarbeitbar sind. Beispielhaft könnten thermoplastische Elastomere auf Olefinbasis, insbesondere Polypropylen/Ethylen- Propylen-Dien-Kautschuk oder Olefincopolymere, thermoplastische Polyurethane, thermoplastische Copolyester, thermoplastische Styrol-Blockcopolymere, insbesondere Styrol-Butadien-Styrol, Styrol-Ethylen-Butadien-Styrol oder thermoplastische Copolyamide verwendet werden.

Die Feinfasem könnten aus einem aromatischen, thermoplastischen Polyurethan mit einer Bruchdehnung von mehr als 500 % gefertigt sein.

Besonders bevorzugt könnte ein aromatisches, thermoplastisches Polyurethan mit einer nicht zu niedrigen Shore A-Härte und einer Bruchdehnung von mehr als 500% verwendet werden. Dieses Polyurethan zeigt überraschend den Vorteil, dass es bereits bei geringen aufgesponnenen Flächengewichten sehr gute Rückstellkräfte entfaltet. Außerdem verleiht es dem Verbund einen textileren Griff als ein thermoplastisches Polyurethan mit niedriger Shore A-Härte.

Die mittleren Durchmesser der Feinfasem könnten kleiner als 30 µm, bevorzugt kleiner als 20 µm und besonders bevorzugt kleiner gleich 10 µm sein. Durch diese kleinen Faserdurchmesser wird es ermöglicht, auch bei geringen Flächengewichten eine gleichmässige Faserschicht zu erhalten.

Die hier beschriebenen Materialien sind für medizinische Anwendungen und Verwendungen geeignet. Ein Material der hier beschriebenen Art könnte als Trägermaterial zur Herstellung von Wundverbänden verwendet werden. Für diese konkrete Verwendung eignet es sich besonders, da es ein gutes Abrieb-und Elastizitätsverhalten zeigt. Dabei könnte eine Haftklebeschicht oder eine selbstklebende Schicht auf die erste Lage oder die zweite Lage aufgebracht werden, um beispielsweise ein selbstklebendes Tape herzustellen. Unter Wundverbänden im Sinne dieser Beschreibung werden insbesondere Pflaster, Wundverschlussstreifen, Inselpflaster oder Wundschnellverbände verstanden. Weitere Wundverbände sind denkbar. Insbesondere ist denkbar, einen Wundverband aus einem selbstklebenden Tape und einer nicht klebenden Wundauflage herzustellen.

Ein Verfahren zur Herstellung eines Materials der hier beschriebenen Art könnte folgende Schritte umfassen:

Verfestigen eines Vlieses aus Stapelfasern mit Wasserstrahlen zu einem Stapelfaservliesstoff, Führen des Stapelfaservliesstoffes unter eine Spinndüse, Ausbringen von Feinfasem aus einem thermoplastischen Elastomer aus der Spinndüse und Aufbringen der noch weichen Feinfasem auf den Stapelfaservliesstoff.

Zum Aufspinnen der elastomeren Feinfasem bzw. der zweiten Lage kann man gängige Spinnvliesverfahren einsetzen. Besonders bevorzugt könnte die zweite Lage oder Schicht durch ein Meltblownverfahren aufgebracht werden. Hierbei ist möglich, Schichten aus Feinfasem mit großer Gleichmässigkeit zu erhalten. Außerdem lässt sich bei Meltblownverfahren die Spinndüse in geringem Abstand über der zu bespinnenden ersten Lage derart positionieren, dass die Feinfasem mit einer Temperatur auf die erste Lage auftreffen, bei welcher diese noch so weich sind, dass sich eine gute Adhäsion zwischen den beiden Lagen ausbildet.

Zur weiteren Erhöhung der Adhäsion zwischen den beiden Lagen könnte der Verbund direkt im Anschluß an das Spinnvliesverfahren noch durch einen Spalt eines Walzenpaares geführt werden. Das Walzenpaar kann ungeheizt oder geheizt sein. Eine oder beide Walzen könnten eine Gravur aufweisen, um dem Verbund eine Prägung zu verleihen. Die Adhäsion zwischen den beiden Lagen könnte durch eine thermische Bahandlung in einem Ofen verbessert werden.

Es gibt nun verschiedene Möglichkeiten, die Lehre der vorliegenden Erfindung auf vorteilhafte Weise auszugestalten und weiterzubilden, Dazu ist einerseits auf die nachgeordneten Ansprüche, andererseits auf die nachfolgende Erläuterung der Erfindung anhand der Zeichnung zu verweisen.

### Kurzbeschreibung der Zeichnung

In der Zeichnung zeigen
- Fig. 1: eine schematische Darstellung einer Anordnung zur Durchführung eines Verfahrens zur Herstellung eines Materials,
- Fig. 2: eine rastere(ektronenmikroskopische Aufnahme eines Materials.

### Ausführung der Erfindung

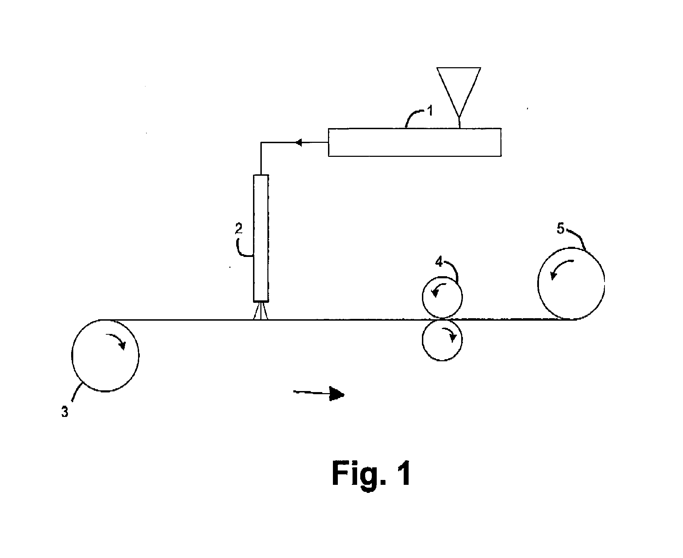

Fig. 1 zeigt in einer schematischen Darstellung eine Anordnung zur Duchführung eines Verfahrens zur Herstellung eines Verbunds für ein Material für medizinische Anwendungen. Der Verfahrensschritt der Verfestigung mittels Wasserstrahlen ist in Fig. 1 nicht dargestellt. Der gerade Pfeil nach rechts zeigt die Maschinenrichtung.

### Dieses Verfahren umfasst die Schritte:

Verfestigen eines Vlieses aus Stapelfasern mit Wasserstrahlen zu einem Staperfaservtiesstoff; Führen des Stapelfaservliesstoffes unter eine Spinndüse; Ausbringen von Feinfasem aus einem thermoplastischen Elastomer aus der Spinndüse und Aufbringen der noch weichen Feinfasem auf den Stapelfaservliesstoff.

Die Anordnung umfasst einen Extruder 1, welcher ein thermoplastisches Elastomer, nämlich thermoplastisches Polyurethan, zu einer Spinndüse 2 führt. Die Spinndüse 2 stößt Feinfasem aus, die auf einem wasserstrahlverfestigen Stapelfaservliesstoff abgelegt werden. Der Stapelfaservliesstoff, der aus Polyester gefertigt ist, wird hierzu von einer Förderwalze 3 abgerollt und unter die Spinndüse 2 geführt. Nach dem Passieren der Spinndüse 2 durchläuft der Verbund aus Stapelfaservliesstoff und Feinfasem einen Spalt, den ein Walzenpaar 4 zwischen sich ausbildet. Die Walzen des Walzenpaars 4 rotieren und komprimieren den Verbund. Der Verbund wird auf einer Aufrollwalze 5 aufgerollt und steht zur weiteren Verarbeitung zur Verfügung.

### Ausführungsbeispiele 1 bis 3:

Ein wasserstrahlverfestigter Stapetfaservliesstoff mit einem Flächengewicht von 38 g/m² aus 10% Polyester wurde durch ein Meltblownverfahren jeweils mit einer Polyurethanschicht von 10, 15 und 20 g/m² beschichtet.

Der mit 15 g/m² beschichtete Verbund wurde drei Dehnungs- und Entspannungszyklen mit einer Maximaldehnung um jeweils 50 % der Ausgangslänge unterworfen. Beim dritten Dehnungszyklus zeigte der Verbund bei 50 % Dehnung eine Rückstellkraft in Höhe von 83 % der maximalen Rückstellkraft des ersten Dehnungszyklusses.

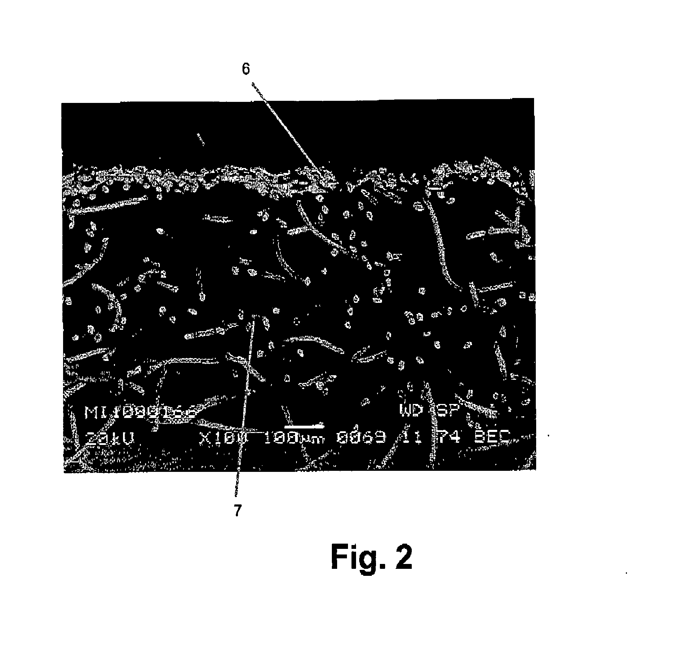

Fig. 2 zeigt eine rasterelektronenmikroskopische Aufnahme des Ausführungsbeispiels 1.

Fig. 1 zeigt ein Material, umfassend einen Verbund aus einer ersten Lage 7 und einer zweiten Lage 6, wobei die erste Lage 7 als Stapelfaservilesstoff bestehend aus Stapelfasern ausgestaltet ist und wobei die zweite Lage 6 aus elastomeren Feinfasem gefertigt ist. Die Feinfasem sind derart auf die zweite Lage 6 aufgesponnen, dass ein adhäsiver Kontakt zwischen beiden Lagen 6, 7 entsteht, wobei der adhäsive Kontakt an Berührungspunkten der Feinfasem und Stapelfasem entsteht und wobei diese Berührungspunkte sich über nahezu die kompletten aneinander liegenden Grenzflächen der Lagen 6, 7 erstrecken.

### Ausführungsbeispiele 4 bis 6:

Ein wasserstrahlverfestigter Stapelfaservliesstoff mit einem Flächengewicht von 30 g/m₂ aus 10% Polyester wurde durch ein Meltblownverfahren jeweils mit einer Polyurethanschicht von 10, 15 und 20 g/m² beschichtet.

Der mit 15 g/m² beschichtete Verbund wurde drei Dehnungs- und Entspannungszyklen mit einer Maximaldehnung um jeweils 50 % der Ausgangslänge unterworfen. Beim dritten Dehnungszyklus zeigte der Verbund bei 50 % Dehnung eine Rückstellkraft in Höhe von 83 % der maximalen Rückstellkraft des ersten Dehnungszyklusses.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Material, umfassend einen Verbund aus einer ersten Lage (7) und einer zweiten Lage (6), wobei die erste Lage (7) als Stapelfaservliesstoff bestehend aus Stapelfasern ausgestaltet ist und wobei die zweite Lage (6) aus elastomeren Feinfasem gefertigt ist,
**dadurch gekennzeichnet, dass** die Feinfasem derart auf die zweite Lage (6) aufgesponnen sind, dass ein adhäsiver Kontakt zwischen beiden Lagen (6, 7) entsteht, wobei der adhäsive Kontakt an Berührungspunkten der Feinfasem und Stapelfasern entsteht und wobei diese Berührungspunkte sich über die aneinander liegenden Grenzflächen der Lagen (6, 7) erstrecken.

2. Material nach Anspruch 1, **dadurch gekennzeichnet, dass** der Stapelfaservliesstoff durch Wasserstrahlen verfestigt ist und die Feinfasem ein Meltblownvlies oder einen Meltblownvliesstoff ausbilden.

3. Material nach Anspruch 1 oder 2, **dadurch gekennzeichnet, dass** die zweite Lage (6) ein Flächengewicht von höchstens 10 g/m² aufweist,

4. Material nach einem der Ansprüche 1 bis 3, **dadurch gekennzeichnet, dass** der Stapelfaservliesstoff als mit Wasserstrahlen verfestigter Polyestervliesstoff mit einem Flächengewicht im Bereich 20 bis 50 g/m² ausgestaltet ist.

5. Material nach einem der Ansprüche 1 bis 4, **dadurch gekennzeichnet, dass** der Stapelfaservliesstoff ein Flächengewicht im Bereich 30 bis 40 g/m² aufweist, wobei er eine Bruchdehnung quer zur Maschinenrichtung von mehr als 120 %, bevorzugt mehr als 150 % aufweist.

6. Material nach einem der Ansprüche 1 bis 5, **dadurch gekennzeichnet, dass** die Fasertiter der Stapelfasern im Bereich 0,5 bis 4,4 dtex liegen.

7. Material nach einem der Ansprüche 1 bis 6, **dadurch gekennzeichnet, dass** die elastomeren Feinfasem der zweiten Lage (6) aus thermoplastischen Elastomeren bestehen.

8. Material nach einem der Ansprüche 1 bis 7, **dadurch gekennzeichnet, dass** die Feinfasem aus einem aromatischen, thermoplastischen Polyurethan mit einer Bruchdehnung von mehr als 500 % gefertigt sind.

9. Material nach einem der Ansprüche 1 bis 8, **dadurch gekennzeichnet, dass** die mittleren Durchmesser der Feinfasem kleiner als 30 µm, bevorzugt kleiner als 20 µm und besonders bevorzugt kleiner gleich 10 µm sind.

10. Verwendung eines Materials nach einem der voranstehenden Ansprüche als Trägermaterial zur Herstellung von Wundverbänden.

11. Verfahren zur Herstellung eines Materials nach einem der Ansprüche 1 bis 9, umfassend die Schritte:
Verfestigen eines Vlieses aus Stapelfasern mit Wasserstrahlen zu einem Stapelfaservliesstoff;
Führen des Stapelfaservliesstoffes unter eine Spinndüse;
Ausbringen von Feinfasem aus einem thermoplastischen Elastomer aus der Spinndüse und
Aufbringen der noch weichen Feinfasem auf den Stapelfaservliesstoff.
